# EUROPÄISCHE PATENTANMELDUNG

(11) **EP 2 600 491 A1**
(43) Veröffentlichungstag der Anmeldung: **05.06.2013**
(21) Anmeldenummer: 11191483.4
(22) Anmeldetag: 01.12.2011
(51) Int. Cl.: H02J 9/06, H02M 5/458

(54) **Anordnung zur unterbrechungsfreien Stromversorgung**

(71) Anmelder: AEG Power Solutions B.V., 1161 AH Zwanenburg (NL)
(72) Erfinder: Martin, Xavier, 59581 Warstein (DE); Noack, Hendrik, 01561 Schönborn (DE); Winkler, Detlef, 59494 Soest (DE)
(74) Vertreter: Graefe, Jörg

(57) **Zusammenfassung**

Die Erfindung betrifft eine Anordnung zur unterbrechungsfreien Stromversorgung mit einem Gleichrichter (1), einem Energiespeicher (2) zum Speichern elektrischer Energie, einem Wechselrichter (3), einem Schaltmittel (4) und einer Steuerung (5, 6), wobei der Gleichrichter (1) mit einem Gleichrichtereingang an ein Versorgungsnetz (AC1) anschließbar ist, der Energiespeicher (2) an einen Gleichrichterausgang des Gleichrichters (1) und an einen Wechselrichtereingang des Wechselrichters (3) angeschlossen ist, an einen Wechselrichterausgang des Wechselrichters (3) ein abzusicherndes Netz (AC3) oder ein abzusichernder Verbraucher anschließbar ist, der Gleichrichtereingang oder das Versorgungsnetz (AC1) über das Schaltmittel (4) mit dem Wechselrichterausgang verbindbar ist und der Gleichrichter (1), der Wechselrichter (2) und das Schaltmittel (4) mittels der Steuerung (5, 6) steuer- und/oder regelbar ist, wobei die Anordnung Sensoren (10) zum Messen von Spannungen und/oder Strömen aufweist, wobei jeder Sensor (10) über einen Sensorausgang des Sensors (10) mit genau einem Steuerungsteil (5, 6) verbunden ist und mit jedem eine zu messende Größe in ein Kleinspannungssignal wandelbar ist.

## Beschreibung

Die vorliegende Erfindung betrifft eine Anordnung zur unterbrechungsfreien Stromversorgung mit einem Gleichrichter, einem Energiespeicher zum Speichern elektrischer Energie, einem Wechselrichter, einem Schaltmittel und einer Steuerung. Der Gleichrichter kann mit einem Gleichrichtereingang an ein Versorgungsnetz angeschlossen werden. Der Energiespeicher ist an einen Gleichrichterausgang des Gleichrichters und an einen Wechselrichtereingang des Wechselrichters angeschlossen. An einen Wechselrichterausgang des Wechselrichters kann ein abzusicherndes Netz oder ein abzusichernder Verbraucher angeschlossen werden. Der Gleichrichtereingang oder das Versorgungsnetz können über das Schaltmittel mit dem Wechselrichterausgang verbunden werden und der Gleichrichter, der Wechselrichter und das Schaltmittel können mittels der Steuerung gesteuert oder geregelt werden.

Aus dem Stand der Technik sind eine Vielzahl derartiger Anordnungen zur unterbrechungsfreien Stromversorgung, auch kurz USV genannt, bekannt. Es wird dabei u.a. zwischen dem Typ der Offline-USV und der Online-USV unterschieden.

Eine USV im Offline-Betrieb, auch als Voltage and Frequency Dependent USV (VFD-USV) bzw. passive USV bezeichnet, leitet den Strom bei ungestörtem Versorgungsnetz direkt vom Versorgungsnetz über das geschlossene Schaltmittel, das abzusichernde Netz oder die abzusichernde Last weiter. Außerdem wird vom Eingang der Gleichrichter versorgt, der den elektrischen Energiespeicher lädt. Sollte die Netzversorgung gestört sein, wird mit dem Schaltmittel umgeschaltet und der Ausgang des Wechselrichters, der aus dem Gleichrichter oder dem Energiespeicher gespeist wird, wird mit dem abzusichernden Netz oder der abzusichernden Last verbunden.

Bei einer USV im Online-Betrieb, auch als Voltage and Frequency Independent USV (VFI-USV), Dauerbetriebs-USV, Doppelwandler-USV u. ä. bezeichnet, ist das Versorgungsnetz auf den Eingang des Gleichrichters geführt, der den Energiespeicher speist. Das abzusichernde Netz oder der abzusichernde Verbraucher wird von dem Wechselrichter versorgt, der bei ungestörtem Versorgungsnetz, also bei vorhandener Netzspannung am Gleichrichtereingang, die notwendige Energie über den Gleichrichter bezieht und bei Netzausfall über die Energiespeicher versorgt wird.

Die Wechselspannung am Wechselrichterausgang wird über den Wechselrichter aus der Gleichspannung des sogenannten Zwischenkreises zwischen dem Gleichrichter und dem Wechselrichter erzeugt.

Zur Erhöhung der Versorgungssicherheit ermöglicht bei einer VFI-USV das Schaltmittel, welches bei fehlerfreier Funktion des Gleichrichters und des Wechselrichters das Versorgungsnetz über den Gleichrichter und den Wechselrichter mit dem abzusichernden Netz bzw. dem abzusichernden Verbraucher verbindet, eine so genannte Bypass-Schaltung, die das Versorgungsnetz und das abzusichernde Netz bzw. den abzusichernden Verbraucher über das Schaltmittel unter Umgehung des Gleichrichters und des Wechselrichters verbindet. Bei Auftreten eines Fehlers im Gleichrichter oder Wechselrichter wird der angeschlossene Verbraucher auf diesen Bypass umgeschaltet und somit weiter versorgt.

Die Topologie einer Offline-USV und einer Online-USV können einander entsprechen. Sie lassen sich grundsätzlich an der unterschiedlichen Stellung und Aufgabe des Schaltmittels unterscheiden. Bei einer geeigneten Auslegung der Komponenten einer USV und einer geeigneten Steuerung kann man daher eine Offline-USV in eine Online-USV umwandeln und umgekehrt.

Bei einer von der Anmelderin hergestellten und vertriebenen Online-USV umfasst die Steuerung drei über einen CAN-BUS verbundene Steuerungsteile, von denen ein Steuerungsteil zur Steuerung und/oder Regelung des Gleichrichters, ein Steuerungsteil zur Steuerung und/oder Regelung des Wechselrichters und ein Steuerungsteil zur Steuerung und/oder Regelung des Schaltmittels vorgesehen sind. Jedes Steuerungsteil weist eine integrierte eigene Hilfsstromversorgung auf, durch die das Steuerungsteil mit Hilfsstrom versorgt wird. Fällt ein Steuerungsteil oder eine das Steuerungsteil versorgende Hilfsstromversorgung aus, kann dieser Steuerungsteil nicht zur Versorgung der an die USV angeschlossenen Netze oder Lasten beitragen.

Außerdem sind in jedem Steuerungsteil Sensoren integriert, mit denen verschiedene elektrische Größen am Eingang bzw. am Ausgang des Gleichrichters oder des Wechselrichters oder an anderen Stellen der USV gemessen werden können. Dazu ist jedes Steuerungsteil über Messleitungen mit den Messstellen verbunden. An den Messleitungen liegen zum Teil hohe Spannungen an, die mitunter Störquellen ausgesetzt sind, was zu gestörten Messergebissen führen kann, wenn nicht hinreichende Maßnahmen gegen ein Störung der Messung getroffen sind.

Der Erfindung liegt daher die Aufgabe zu Grunde, eine Anordnung zur unterbrechungsfreien Stromversorgung der eingangs genannten Art so zu verbessern, dass eine höhere Ausfallsicherheit und eine geringere Störanfälligkeit erreicht wird. Insbesondere soll auch die Störanfälligkeit der Messung von elektrischen Größen herabgesetzt werden.

Diese Aufgabe wird durch eine erfindungsgemäße Anordnung gelöst, die Sensoren zum Messen von Spannungen und/oder Strömen aufweist, wobei jeder Sensor über einen Sensorausgang des Sensors mit genau einem Steuerungsteil verbunden sein kann und mit jedem Sensor eine zu messende Größe in ein Kleinspannungssignal, insbesondere ein Schutzkleinspannungssignal gewandelt werden kann, das über eine den Sensor und das Steuerungsteil verbindende Leitung dem Steuerungsteil zugeführt werden kann.

Zumindest ein Teil der Sensoren können einander paarweise zugeordnet sein, wobei die Sensoren eines Sensorpaares zur Messung der gleichen elektrischen Größe mit Kontakten oder Leitungen der Anordnung verbunden sein kann und wobei der eine Sensor eines Sensorpaares mit dem ersten Steuerungsteil und der andere Sensor eines Sensorpaares mit dem zweiten Steuerungsteil verbunden sein kann.

Mittels der Sensoren kann die Spannung am Gleichrichtereingang, am Gleichrichterausgang, am Energiespeicher, am Wechselrichtereingang, am Wechselrichterausgang, an der dem Versorgungsnetz zugewandten Seite des Schaltmittel und/oder an der dem abzusichernden Netz oder der abzusichernden Last zugewandten Seite des Schaltmittel gemessen werden. In den Steuerungsteilen können die Messsignale zur Regelung und/oder Steuerung des Gleichrichters, des Wechselrichters und/oder des Schaltmittels verwendet werden.

Die Sensoren können durch identisch aufgebaute Schaltungsanordnungen gebildet sein.

Die Steuerung einer erfindungsgemäßen Schaltungsanordnung kann zwei Steuerungssteile aufweisen, die zumindest im Hinblick auf das Schaltmittel redundant aufgebaut sind und dass mit einem ersten der Steuerungsteile auch gleichzeitig der Gleichrichter und das Schaltmittel und mit einem zweiten der Steuerungsteile der Wechselrichter und das Schaltmittel steuer- oder regelbar ist. Möglich wäre es auch, dass eines der Steuerungsteile oder beide Steuerungsteile auch im Hinblick auf den Gleichrichter und/oder den Wechselrichter redundant aufgebaut sind, so dass mit dem auch im Hinblick auf den Gleichrichter oder den Wechselrichter redundanten Steuerungsteil gleichzeitig der Gleichrichter, der Wechselrichter und das Schaltmittel steuer- oder regelbar ist.

Bei einer erfindungsgemäßen Anordnung können anderes als beim Stand der Technik nicht drei Steuerungsteile vorgesehen sein sondern nur zwei. Zugleich können die Steuerungsteile so gestaltet, dass zumindest das Schaltmittel mit jedem der Steuerungsteile gesteuert und/oder geregelt werden und möglicherweise auch der Gleichrichter, der Wechselrichter und das Schaltmittel mit einem der Steuerungsteile oder mit jedem der Schaltungsteile gesteuert und/oder geregelt werden kann bzw. können. Im Grunde könnte ein einziger Steuerungsteil für einen Betrieb der Anordnung ausreichen. Durch die erfindungsgemäß vorgesehene Redundanz wird eine höhere Ausfallsicherheit erreicht, obwohl im Vergleich zum Stand der Technik die Anzahl der Steuerungsteile reduziert wird.

Vorteilhaft sind die Steuerungsteile durch identisch aufgebaute Schaltungsanordnungen gebildet, selbst wenn die Steuerungsteile nicht zum Steuern oder Regeln des Wechselrichters, des Gleichrichters und des Schaltmittels vorgesehen sind. Dadurch ist sichergestellt, dass beide Steuerungsteile die Steuerung bzw. Regelung zumindest des Schaltmittels und möglicherweise des Wechselrichters, Gleichrichters und des Schaltmittels übernehmen können. Außerdem kann durch Verwendung identischer Schaltungsanordnungen die Herstellung der Anordnung vereinfacht werden.

Die Steuerungsteile können programmiert sein, wobei sich die Programmierung der Steuerungsteile dadurch unterscheiden kann, dass mit dem ersten Steuerungsteil der beiden Steuerungsteile bei ungestörtem ersten Steuerungsteil zumindest der Gleichrichter steuer- und/oder regelbar und mit dem zweiten Steuerungsteil der beiden Steuerungsteile bei ungestörtem zweiten Steuerungsteil zumindest der Wechselrichter steuer- und/oder regelbar ist. Jedem Steuerungsteil kann durch die Programmierung der Gleichrichter oder der Wechselrichter zugewiesen werden, wobei das Steuerungsteil im störungsfreien Betrieb der Steuerung die zugewiesene Komponente steuert. Zusätzlich kann dem Steuerungsteil auch das Schaltmittel und/oder die andere Komponente zugewiesen werden, wenn zum Beispiel das andere Steuerungsteil ausfällt.

Dadurch das bei ungestörter Steuerung der Gleichrichter dem ersten Steuerungsteil und der Wechselrichter dem zweiten Steuerungsteil zugewiesen ist, ist bei ungestörter Steuerung sichergestellt, dass die Steuerungsteile nicht voll belastet sind, insbesondere thermisch belastet sind, was zu einer höheren Lebensdauer der Schaltungsteile führt.

Bei gestörtem ersten Steuerungsteil kann der Wechselrichter und das Schaltmittel und ggf. der Gleichrichter vom zweiten Steuerungsteil steuer- und/oder regelbar und bei gestörtem zweiten Steuerungsteil kann der Gleichrichter und das Schaltmittel und ggf. der Wechselrichter vom ersten Steuerungsteil steuer- und/oder regelbar sein.

Eine erfindungsgemäße Schaltungsanordnung kann wenigstens zwei Mittel zur Hilfsstromversorgung aufweisen und jedes Mittel zur Hilfsstromversorgung mit einem Eingang für die Hilfsstromversorgung des ersten Steuerungsteils und einem Eingang für die Hilfsstromversorgung des zweiten Steuerungsteils verbunden ist, um die Steuerungsteile mit elektrischer Energie zu versorgen.

Eine erfindungsgemäße Schaltungsanordnung kann wenigstens zwei Mittel zur Hilfsstromversorgung, nämlich ein erstes und ein zweites Mittel zur Hilfsstromversorgung mit je zwei Ausgängen aufweisen. An den Ausgängen kann eine Hilfsspannung abgreifbar sein. Eine erster der beiden Ausgänge des ersten und des zweiten Mittels zur Hilfsstromversorgung kann mit einem Eingang für die Hilfsstromversorgung des ersten Steuerungsteils und eine zweiter der beiden Ausgänge des ersten und des zweiten Mittels zur Hilfsstromversorgung kann mit einem Eingang für die Hilfsstromversorgung des zweiten Steuerungsteils verbunden sein.

Die beiden Ausgänge der Mittel zur Hilfsstromversorgung sind vorzugsweise so von einander entkoppelt, dass bei einer Störung des einen Ausgangs, zum Beispiel durch einen Kurzschluss, der andere Ausgang des gleichen Mittels zur Hilfsstromversorgung ohne Beeinträchtigung bleibt. Außerdem sind vorzugsweise die beiden Eingänge der Steuerungsteile ebenso entkoppelt, so dass die eine Störung an einem Eingang für die Hilfsstromversorgung ohne Einfluss auf den anderen Eingang des gleichen Steuerungsteils bleibt.

Eine erfindungsgemäße Schaltungsanordnung kann alternativ wenigstens zwei Mittel zur Hilfsstromversorgung mit je einem Ausgang aufweisen, an welchem eine Hilfsspannung abgreifbar ist, wobei jeder Ausgang eines Mittels zur Hilfsstromversorgung mit einem Eingang für die Hilfsstromversorgung des ersten Steuerungsteils und des zweiten Steuerungsteils verbunden ist.

Anders als beim Stand der Technik sind mehrere von der Steuerung getrennte Mittel zur Hilfsstromversorgungen vorgesehen. Die Mittel zur Hilfsstromerzeugung sind anderes als beim Stand der Technik auch nicht mehr einem Steuerungsteil besonders zugewiesen und nicht integrale Teile der Steuerungsteile. Daher wird an die Steuerungsteile der Erfindung auch keine vergleichsweise hohe Spannung herangeführt, die an einem Eingang der Hilfsstromversorgung anliegt und bei herkömmlichen Steuerungsteilen mit integraler Hilfsstromversorgung auch am Steuerungsteil anliegt. Vielmehr kann jedes Mittel zur Hilfsstromversorgung das erste Steuerungsteil und/oder das zweite Steuerungsteil mit der Hilfsenergie versorgen. Auch die Hilfsstromversorgung ist somit redundant aufgebaut. Vorteilhaft werden bei ungestörter Hilfsstromversorgung beide Mittel zur Hilfsstromerzeugung so betrieben, dass sie nur die Hälfte der benötigten Leistung bereitstellen müssen, was zu einer geringeren Belastung der Mittel zur Hilfsstromversorgung, insbesondere zu einer geringeren thermische Belastung und damit zu einer höheren Lebensdauer der Mittel zur Hilfsstromversorgung führt.

Vorteilhaft sind die Mittel zur Hilfsstromversorgung identisch aufgebaute Schaltungsanordnungen, was insbesondere die Herstellung der erfindungsgemäßen Anordnung vereinfacht.

Jedes Mittel zur Hilfsstromversorgung kann einen ersten Eingang, einen zweiten Eingang und einen dritten Eingang und ggf. einen vierten Eingang aufweisen. Über die Eingänge kann das Mittel mit dem Gleichrichtereingang, mit dem Wechselrichterausgang, mit dem Energiespeicher oder dem Eingang des Schaltmittels verbunden sein. Die Versorgung der Mittel zur Hilfsstromversorgung kann über jeden der drei bzw. vier Eingänge erfolgen.

Die Steuerungsteile sind vorzugsweise über einen Kommunikationsbus, zum Beispiel einem CAN-Bus miteinander verbunden.

Weitere Merkmale und Vorteile der Erfindung werden anhand der nachfolgenden Beschreibung eines Ausführungsbeispiels erläutert.

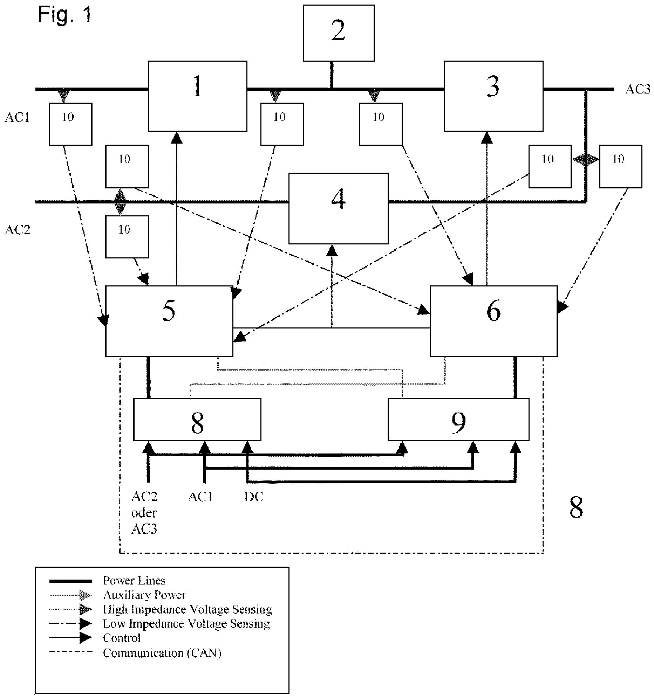

Darin zeigt
- Fig. 1: eine schematische Darstellung einer erfindungsgemäßen Online-USV.

Die erfindungsgemäße USV ist in der Fig. 1 einpolig dargestellt, d.h. es ist nur ein Außenleiter der USV nicht jedoch ein Neutralleiter der USV dargestellt. Ebenso wenig sind Gleichspannungen zweipolig dargestellt.

Die erfindungsgemäße USV weist einen Gleichrichter 1 , einen Energiespeicher 2, einen Wechselrichter 3 und ein Schaltmittel 4 auf. Ein Eingang des Gleichrichters 1 ist mit einem Versorgungsnetz AC1 verbunden. Ein Ausgang des Gleichrichters 1 ist zum Einen mit dem Energiespeicher 2 und zum Anderen mit einem Eingang des Wechselrichters 3 verbunden. Ein Ausgang des Wechselrichters 2 ist mit einem abzusichernden Netz AC3 verbunden.

Das Schaltmittel 4 kann je nach Schaltstellung das Versorgungsnetz AC1 mit dem abzusichernden Netz AC3 verbinden. Arbeiten der Gleichrichter 1 und der Wechselrichter 3 störungsfrei und ist auch das Versorgungsnetz AC1 ungestört, wird das abzusichernde Netz AC3 über den Gleichrichter 1 und den Wechselrichter 3 mit elektrischer Energie versorgt. Das Schaltmittel unterbricht die direkte Verbindung zwischen dem Versorgungsnetz AC1 und dem abzusichernden Netz AC3. Gleichzeitig wird der Energiespeicher 2 über den Gleichrichter 1 mit elektrischer Energie aus dem Ausgang des Gleichrichters 1 versorgt.

Wird die Versorgung des abzusichernden Netzes AC3 durch das Versorgungsnetz AC1 über den Gleichrichter 1 und den

Wechselrichter 3 aufgrund einer Störung des Wechselrichters 3 unterbrochen und ist gleichzeitig das Versorgungsnetz AC1 ungestört, wird durch das Schaltmittel 4 die direkte Verbindung zwischen dem Versorgungsnetz AC1 und dem abzusichernden Netz AC3 hergestellt. Die Versorgung erfolgt dann unter Umgehung des Gleichrichters 1 und des Wechselrichters 3.

Ist dagegen das versorgenden Netz AC1 gestört und wenigstens der Energiespeicher 2 und der Wechselrichter 3 ungestört, ist das Schaltmittel 4 vorzugsweise geöffnet und die Versorgung des abzusichernden Netzes erfolgt über den Wechselrichter 3 aus dem Energiespeicher 2.

Ist schließlich sowohl das versorgende Netz AC1 als auch der Energiespeicher 2 oder der Wechselrichter 3 gestört, ist die Versorgung des abzusichernden Netzes AC 3 unterbrochen.

Soweit betrachtet entspricht die erfindungemäße USV einer herkömmlichen Online-USV.

Die erfindungsgemäße USV unterscheidet sich von einer herkömmlichen USV, wie sie einleitend beschrieben worden ist, durch eine neue Architektur einer Steuerung, einer Hilfsstromversorgung und einer Messwerterfassung.

Die neue Steuerung wird durch ein erstes Steuerungsteil 5 und ein zweites Steuerungsteil 6 gebildet. Die Steuerungsteile 5, 6 werden durch Schaltungsanordnungen gebildet, die auf Schaltungsträgern angeordnet sind. Die Schaltungsanordnungen sind vorzugsweise identisch aufgebaut und unterscheiden sich lediglich durch eine Programmierung, wobei die Programmierung auch durch die Auswahl einzelner Bauelemente, durch Schalterstellungen oder durch Jumper erreicht werden kann.

Die Steuerungsteile 5, 6 sind so gestaltet, dass sie dazu in der Lage sind, den Gleichrichter 1 , den Wechselrichter 3 und das Schaltmittel 4 zu steuern oder zu regeln. Dazu sind die Steuerungsteile 5, 6 über Leitungen mit allen drei Komponenten, dem Gleichrichter 1 , dem Wechselrichter 3 und dem Schaltmittel 4, verbunden.

Das Steuern oder Regeln der drei Komponenten 1, 3, 4 oder von nur zwei Komponenten der USV kann gleichzeitig erfolgen. Es ist möglich, dass nur eine einzige der Komponenten 1, 3, 4 gesteuert oder geregelt wird.

Durch die Programmierung der Steuerungsteile 5, 6 kann erreicht werden, dass zum Beispiel das erste Steuerungsteil 5 im ungestörten Zustand des Steuerungsteils 5 zumindest den Gleichrichter 1 steuert und/oder regelt. Es kann ebenso erreicht werden, dass das zweite Steuerungsteil 6 im ungestörten Zustand des Steuerungsteils 6 zumindest den Wechselrichter 3 steuert und/oder regelt.

Sobald eines der beiden Steuerungsteile 5, 6 ausfällt, kann dann das andere Steuerungsteil 6, 5 die Funktion des ausgefallenen Steuerungsteils 5, 6 vollständig übernehmen.

Zur Kommunikation des einen Steuerungsteils 5 mit dem anderen Steuerungsteil 6 sind die beiden Steuerungsteile 5, 6 über einen Bus, vorzugsweise über einen CAN-Bus 7 miteinander verbunden.

Die beiden Steuerungsteile 5, 6 werden von einer
Hilfsstromversorgung mit elektrischer Energie für den Betrieb versorgt. Die Hilfsstromversorgung wird durch zwei Mittel 8,9 zur Hilfsstromversorgung gebildet. Die beiden Mittel 8, 9 zur Hilfsstromversorgung sind identisch aufgebaut. Sie haben je einen Ausgang, an dem die für den Betrieb der Steuerungsteile 5, 6 notwendige elektrische Energie bereitgestellt wird.

Die Mittel 8, 9 zur Hilfsstromversorgung entnehmen die elektrische Energie je nach Verfügbarkeit aus dem zu versorgenden Netz AC1 , dem abzusichernden Netz AC3 oder dem Energiespeicher 2, weshalb die beiden Mittel 8, 9 zur Hilfsstromversorgung über Eingänge und Leitungen mit dem versorgenden Netz AC1 , dem abzusichernden Netz AC3 und dem Energiespeicher 2 verbunden sind.

Die Mittel 8, 9 zur Hilfsstromversorgung sind so ausgelegt, dass sie sowohl das erste Steuerungsteil 5 als auch das Steuerungsteil 6 gleichzeitig versorgen können. Die Mittel 8, 9 sind allerdings vorzugsweise durch eine Programmierung so gestaltet, dass sie jeweils nur die Hälfte der von beiden Steuerungsteilen 5, 6 gleichzeitig aufgenommenen Leistung bereitstellen und somit bei ungestörten Mitteln 8, 9 zur Hilfsstromversorgung nur bis zur Hälfte der Nennleistung belastet werden, was die Lebensdauer der Mittel 8, 9 zu Hilfsstromversorgung gegenüber einer höheren Belastung erhöht.

Schließlich sind die beiden Steuerungsteile 5, 6 mit Sensoren 10 verbunden, mit denen elektrische Größen am Ein- und/oder Ausgang des Gleichrichters 1 und/oder des Wechselrichters 3, am Energiespeicher 2 oder am Schaltmittel 4 gemessen und in ein elektrisches Kleinspannungssignal gewandelt werden kann. Diese Kleinspannungssignale werden über Leitungen den Steuerungsteilen 5, 6 zugeführt. In den Steuerungsteilen 5, 6 werden die Kleinspannungssignale verarbeitet, um den Gleichrichter 1 , den Wechselrichter 2 und/oder das Schaltmittel 4 zu steuern und/oder zu regeln oder den Zustand des Gleichrichters 1 , des Energiespeichers 2, des Wechselrichters 3 und/oder des Schaltmittels 4 zu prüfen und Störungen festzustellen.

Die Sensoren 10 sind paarweise einander zugeordnet, wobei die Sensoren (10) eines Paares die gleiche elektrische Größe messen. Während der eine Sensor 10 eines Paares mit dem einen Steuerungsteil 5 zugeordnet ist, ist der andere Sensor (10) eines Paares mit dem anderen Steuerungsteil 6 verbunden, so dass beiden Steuerungsteile 5, 6 die gleiche elektrische Größe zur Verfügung gestellt wird. Auch bei den Sensoren ist dadurch für eine Redundanz gesorgt.

Die Sensoren 10 sind vorzugsweise identisch aufgebaut.

## Patentansprüche

1. Anordnung zur unterbrechungsfreien Stromversorgung mit einem Gleichrichter (1), einem Energiespeicher (2) zum Speichern elektrischer Energie, einem Wechselrichter (3), einem Schaltmittel (4) und einer Steuerung (5, 6), wobei der Gleichrichter (1) mit einem Gleichrichtereingang an ein Versorgungsnetz (AC1) anschließbar ist, der Energiespeicher (2) an einen Gleichrichterausgang des Gleichrichters (1) und an einen Wechselrichtereingang des Wechselrichters (3) angeschlossen ist, an einen Wechselrichterausgang des Wechselrichters (3) ein abzusicherndes Netz (AC3) oder ein abzusichernder Verbraucher anschließbar ist, der Gleichrichtereingang oder das Versorgungsnetz (AC1) über das Schaltmittel (4) mit dem Wechselrichterausgang verbindbar ist und der Gleichrichter (1), der Wechselrichter (2) und das Schaltmittel (4) mittels der Steuerung (5, 6) steuer- und/oder regelbar ist,
**dadurch gekennzeichnet**,
die Anordnung Sensoren (10) zum Messen von Spannungen und/oder Strömen aufweist, wobei jeder Sensor (10) über einen Sensorausgang des Sensors (10) mit genau einem Steuerungsteil (5, 6) verbunden ist und mit jedem eine zu messende Größe in ein Kleinspannungssignal wandelbar ist.

2. Anordnung nach Anspruch 1, **dadurch gekennzeichnet, dass** zumindest ein Teil der Sensoren (10) einander paarweise zugeordnet sind, wobei die Sensoren (10) eines Sensorpaares zur Messung der gleichen elektrischen Größe mit Kontakten oder Leitungen der Anordnung verbunden sind und wobei der eine Sensor (10) eines Sensorpaares mit dem ersten Steuerungsteil (5) und der andere Sensor (10) eines Sensorpaares mit dem zweiten Steuerungsteil (6) verbunden ist.

3. Anordnung nach Anspruch 2 oder 3, **dadurch gekennzeichnet, dass** mittels der Sensoren (10) die Spannung am Gleichrichtereingang, am Gleichrichterausgang, am Energiespeicher (2), am Wechselrichtereingang, am Wechselrichterausgang, an der dem Versorgungsnetz (AC2) zugewandten Seite des Schaltmittel und/oder an der dem abzusichernden Netz (AC3) oder der abzusichernden Last zugewandten Seite des Schaltmittel (4) messbar ist.

4. Anordnung nach einem der Ansprüche 1 bis 3, **dadurch gekennzeichnet, dass** die Sensoren (10) identisch aufgebaute Schaltungsanordnungen sind.

5. Anordnung nach einem der Ansprüche 1 bis 4, **dadurch gekennzeichnet, dass** die Anordnung wenigstens zwei Mittel (8, 9) zur Hilfsstromversorgung mit zwei Ausgängen aufweist, an welchem eine Hilfsspannung abgreifbar ist, wobei jeder Ausgang mit einem Eingang für die Hilfsstromversorgung des ersten Steuerungsteils (5) oder des zweiten Steuerungsteils (6) verbunden ist.

6. Anordnung nach Anspruch 5, **dadurch gekennzeichnet, dass** die Mittel (8, 9) zur Hilfsstromversorgung identisch aufgebaute Schaltungsanordnungen sind.

7. Anordnung nach Anspruch 5 oder 6, **dadurch gekennzeichnet, dass** jedes Mittel (8, 9) zur Hilfsstromversorgung einen ersten Eingang hat, über den das Mittel mit dem Gleichrichtereingang verbunden ist, einen zweiten Eingang hat, über den das Mittel mit dem Wechselrichterausgang verbunden ist, und einen dritten Eingang hat, mit dem das Mittel mit dem Energiespeicher (2) verbunden ist.

8. Anordnung nach einem der Ansprüche 1 bis 7, **dadurch gekennzeichnet, dass** dass die Steuerung (5, 6) zwei Steuerungsteile (5, 6) aufweist, die redundant aufgebaut sind und dass mit den Steuerungsteilen (5, 6) auch gleichzeitig der Gleichrichter (1) und das Schaltmittel (4) oder der Wechselrichter (3) und das Schaltmittel (4) steuer- oder regelbar ist.

9. Anordnung nach Anspruch 8, **dadurch gekennzeichnet, dass** die Steuerungsteile (5, 6) identisch aufgebaute Schaltungsanordnungen sind.

10. Anordnung nach Anspruch 8 oder 9, **dadurch gekennzeichnet, dass** die Steuerungsteile (5, 6) programmiert, eingerichtet oder über Ausgänge mit der übrigen Anordnung verbunden sind, wobei ein erstes Steuerungsteil (5) der Steuerungsteile (5, 6) so programmiert, eingerichtet oder über Ausgänge mit der übrigen Anordnung verbunden ist, dass bei ungestörtem ersten Steuerungsteil (5) zumindest der Gleichrichter (1) vom ersten Steuerungsteil (5) steuer- und/oder regelbar ist, und wobei ein zweites Steuerungsteil (6) der Steuerungsteile (5, 6) so programmiert, eingerichtet oder über Ausgänge mit der übrigen Anordnung verbunden ist, dass bei ungestörtem zweiten Steuerungsteil (6) zumindest der Wechselrichter (3) vom zweiten Steuerungsteil (6) steuer- und/oder regelbar ist.

11. Anordnung nach Anspruch 10, **dadurch gekennzeichnet, dass** die Steuerungsteile (5, 6) so programmiert, eingerichtet oder über Ausgänge mit der übrigen Anordnung verbunden sind, dass bei gestörtem ersten Steuerungsteil (5) der Wechselrichter (3) und das Schaltmittel (4) vom zweiten Steuerungsteil (6) steuer-und/oder regelbar und bei gestörtem zweiten Steuerungsteil (6) der Gleichrichter (1) und das Schaltmittel (4) vom ersten Steuerungsteil (5) steuer- und/oder regelbar sind.

12. Anordnung nach einem der Ansprüche 1 bis 1 1 , **dadurch gekennzeichnet, dass** die Steuerungsteile (5, 6) über einen Kommunikationsbus, zum Beispiel einem CAN-Bus (8) miteinander verbunden sind.

13. Anordnung nach einem der Ansprüche 1 bis 12, **dadurch gekennzeichnet, dass** die Steuerungsteile (5, 6) so programmiert, eingerichtet oder über Ausgänge mit der übrigen Anordnung verbunden sind, dass bei gestörtem ersten Steuerungsteil (5) der Wechselrichter (3), der Gleichrichter (1) und das Schaltmittel (4) vom zweiten Steuerungsteil (6) steuer-und/oder regelbar und/oder bei gestörtem zweiten Steuerungsteil (6) der Wechselrichter (3), der Gleichrichter (1) und das Schaltmittel (4) vom ersten Steuerungsteil (5) steuer-und/oder regelbar sind.

## Geänderte Patentansprüche

### Geänderte Patentansprüche gemäss Regel 137(2) EPÜ.

**1.** Anordnung zur unterbrechungsfreien Stromversorgung mit einem Gleichrichter (1), einem Energiespeicher (2) zum Speichern elektrischer Energie, einem Wechselrichter (3), einem Schaltmittel (4) und einer Steuerung (5, 6), wobei der Gleichrichter (1) mit einem Gleichrichtereingang an ein Versorgungsnetz (AC1) anschließbar ist, der Energiespeicher (2) an einen Gleichrichterausgang des Gleichrichters (1) und an einen Wechselrichtereingang des Wechselrichters (3) angeschlossen ist, an einen Wechselrichterausgang des Wechselrichters (3) ein abzusicherndes Netz (AC3) oder ein abzusichernder Verbraucher anschließbar ist, der Gleichrichtereingang oder das Versorgungsnetz (AC1) über das Schaltmittel (4) mit dem Wechselrichterausgang verbindbar ist und der Gleichrichter (1), der Wechselrichter (2) und das Schaltmittel (4) mittels der Steuerung (5, 6) steuer- und/oder regelbar ist, wobei
die Anordnung Sensoren (10) zum Messen von Spannungen und/oder Strömen aufweist, wobei jeder Sensor (10) über einen Sensorausgang des Sensors (10) mit genau einem Steuerungsteil (5, 6) verbunden ist und mit jedem eine zu messende Größe in ein Kleinspannungssignal wandelbar ist
**dadurch gekennzeichnet,**
**dass** die Sensoren (10) identisch aufgebaute Schaltungsanordnungen sind.

**2.** Anordnung nach Anspruch 1, **dadurch gekennzeichnet, dass** zumindest ein Teil der Sensoren (10) einander paarweise zugeordnet sind, wobei die Sensoren (10) eines Sensorpaares zur Messung der gleichen elektrischen Größe mit Kontakten oder Leitungen der Anordnung verbunden sind und wobei der eine Sensor (10) eines Sensorpaares mit dem ersten Steuerungsteil (5) und der andere Sensor (10) eines Sensorpaares mit dem zweiten Steuerungsteil (6) verbunden ist.

**3.** Anordnung nach Anspruch 1 oder 2, **dadurch gekennzeichnet, dass** mittels der Sensoren (10) die Spannung am Gleichrichtereingang, am Gleichrichterausgang, am Energiespeicher (2), am Wechselrichtereingang, am Wechselrichterausgang, an der dem Versorgungsnetz (AC2) zugewandten Seite des Schaltmittel und/oder an der dem abzusichernden Netz (AC3) oder der abzusichernden Last zugewandten Seite des Schaltmittel (4) messbar ist.

**4.** Anordnung nach einem der Ansprüche 1 bis 3, **dadurch gekennzeichnet, dass** die Anordnung wenigstens zwei Mittel (8, 9) zur Hilfsstromversorgung mit zwei Ausgängen aufweist, an welchem eine Hilfsspannung abgreifbar ist, wobei jeder Ausgang mit einem Eingang für die Hilfsstromversorgung des ersten Steuerungsteils (5) oder des zweiten Steuerungsteils (6) verbunden ist.

**5.** Anordnung nach Anspruch 4, **dadurch gekennzeichnet, dass** die Mittel (8, 9) zur Hilfsstromversorgung identisch aufgebaute Schaltungsanordnungen sind.

**6.** Anordnung nach Anspruch 4 oder 5, **dadurch gekennzeichnet, dass** jedes Mittel (8, 9) zur Hilfsstromversorgung einen ersten Eingang hat, über den das Mittel mit dem Gleichrichtereingang verbunden ist, einen zweiten Eingang hat, über den das Mittel mit dem Wechselrichterausgang verbunden ist, und einen dritten Eingang hat, mit dem das Mittel mit dem Energiespeicher (2) verbunden ist.

**7.** Anordnung nach einem der Ansprüche 1 bis 6, **dadurch gekennzeichnet, dass** dass die Steuerung (5, 6) zwei Steuerungsteile (5, 6) aufweist, die redundant aufgebaut sind und dass mit den Steuerungsteilen (5, 6) auch gleichzeitig der Gleichrichter (1) und das Schaltmittel (4) oder der Wechselrichter (3) und das Schaltmittel (4) steuer- oder regelbar ist.

**8.** Anordnung nach Anspruch 7, **dadurch gekennzeichnet, dass** die Steuerungsteile (5, 6) identisch aufgebaute Schaltungsanordnungen sind.

**9.** Anordnung nach Anspruch 7 oder 8, **dadurch gekennzeichnet, dass** die Steuerungsteile (5, 6) programmiert, eingerichtet oder über Ausgänge mit der übrigen Anordnung verbunden sind, wobei ein erstes Steuerungsteil (5) der Steuerungsteile (5, 6) so programmiert, eingerichtet oder über Ausgänge mit der übrigen Anordnung verbunden ist, dass bei ungestörtem ersten Steuerungsteil (5) zumindest der Gleichrichter (1) vom ersten Steuerungsteil (5) steuer- und/oder regelbar ist, und wobei ein zweites Steuerungsteil (6) der Steuerungsteile (5, 6) so programmiert, eingerichtet oder über Ausgänge mit der übrigen Anordnung verbunden ist, dass bei ungestörtem zweiten Steuerungsteil (6) zumindest der Wechselrichter (3) vom zweiten Steuerungsteil (6) steuer- und/oder regelbar ist.

**10.** Anordnung nach Anspruch 9, **dadurch gekennzeichnet, dass** die Steuerungsteile (5, 6) so programmiert, eingerichtet oder über Ausgänge mit der übrigen Anordnung verbunden sind, dass bei gestörtem ersten Steuerungsteil (5) der Wechselrichter (3) und das Schaltmittel (4) vom zweiten Steuerungsteil (6) steuer- und/oder regelbar und bei gestörtem zweiten Steuerungsteil (6) der Gleichrichter (1) und das Schaltmittel (4) vom ersten Steuerungsteil (5) steuer- und/oder regelbar sind.

**11.** Anordnung nach einem der Ansprüche 1 bis 10, **dadurch gekennzeichnet, dass** die Steuerungsteile (5, 6) über einen Kommunikationsbus, zum Beispiel einem CAN-Bus (8) miteinander verbunden sind.

**12.** Anordnung nach einem der Ansprüche 1 bis 11, **dadurch gekennzeichnet, dass** die Steuerungsteile (5, 6) so programmiert, eingerichtet oder über Ausgänge mit der übrigen Anordnung verbunden sind, dass bei gestörtem ersten Steuerungsteil (5) der Wechselrichter (3), der Gleichrichter (1) und das Schaltmittel (4) vom zweiten Steuerungsteil (6) steuer- und/oder regelbar und/oder bei gestörtem zweiten Steuerungsteil (6) der Wechselrichter (3), der Gleichrichter (1) und das Schaltmittel (4) vom ersten Steuerungsteil (5) steuer- und/oder regelbar sind.
